# EUROPEAN PATENT APPLICATION

(11) **EP 4 745 027 A1**
(43) Date of publication of application: **20.05.2026**
(21) Application number: 25210363.5
(22) Date of filing: 22.10.2025
(51) Int. Cl.: B64C 3/56, B64C 23/06, B64D 15/12

(54) **AIRCRAFT WING ASSEMBLY**

(30) Priority: 15.11.2024 GB 202416812
(71) Applicant: Airbus Operations Limited, Bristol BS34 7PA (GB)
(72) Inventor: MORRELL, Paul, Bristol, BS34 7PA (GB); DURSTON, John, Bristol, BS34 7PA (GB); HEMZACZEK, Rafal, Bristol, BS34 7PA (GB)
(74) Representative: Abel & Imray LLP

(57) **Abstract**

The invention provides an aircraft wing assembly with a fixed wing and a wing tip device. The wing tip device is moveable between a flight configuration and a ground configuration. In the ground configuration the span of the aircraft wing assembly is reduced. The fixed wing comprises a fixed wing lug and the wing tip device comprises a wing tip lug. A locking pin is provided. In the flight configuration the fixed wing lug and wing tip device lug are aligned such that the locking pin may be inserted through the fixed wing lug and wing tip device lug into a locking position to lock the wing tip device in the flight configuration. The locking pin is hollow and comprises a heating element.

## Description

### BACKGROUND OF THE INVENTION

The present invention concerns an aircraft wing assembly comprising a wing tip device configurable between a flight configuration and a ground configuration.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Movable wing tip devices have therefore been introduced into passenger aircraft whereby a wing tip device is movable between a flight configuration for use during flight and a ground configuration for use during ground-based operations. In the flight configuration, the wing tip device forms an extension of the wing and contributes to the lift generated by the wing. In the ground configuration, the wing tip device is moved away from the flight configuration such that the effective span of the aircraft wing is reduced, thereby allowing use of existing gates and taxiways. Such an arrangement is sometimes referred to as a 'folding wing tip'.

During any stage in the flight cycle, an aircraft wing and its movable components may encounter ice formation, as a result moving components may encounter reduced movement capabilities. In particular, the ice formation may obstruct or hinder the movement of a wing tip device between a flight and ground configuration, which could lead to delays getting aircraft on gate, and/or potentially damage components within an aircraft wing.

Aspects of the present invention seek to mitigate one or more of the above-mentioned challenges. Alternatively, or additionally, aspects of the present invention seek to provide an improved aircraft wing assembly, an improved aircraft wing, and an improved aircraft.

### SUMMARY OF THE INVENTION

The present invention provides, according to a first aspect of the invention an aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, and the fixed wing comprises a fixed wing lug, the wing tip device comprises a wing tip lug, and the wing assembly further comprises a locking pin, wherein in the flight configuration the fixed wing lug and wing tip device lug are aligned such that the locking pin may be inserted through the fixed wing lug and wing tip device lug into a locking position to lock the wing tip device in the flight configuration, wherein the locking pin is hollow and comprises a heating element.

The heating element may be used to heat the locking pin, for example to melt, and/or reduce the adhesive strength of any ice that has formed on the locking pin, fixed wing lugs, or wing tip device lugs during flight. The heating element may be activated and heat the locking pin whenever an aircraft including the wing assembly lands. Alternatively, the heating element may be activated only when icing up of the locking pin has been detected. Alternatively the pin may be heated at a low level throughout the flight. A temperature sensor may be provided in or proximate to the locking pin to detect the temperature of the locking pin. The temperature sensor may be utilised to determine whether the locking pin has iced up, or is likely to be in an iced up state. The temperature sensor may be located remote to the locking pin, for example on the fuselage of the aircraft. Alternatively or additionally, the heating element may be activated in response to weather reports and/or flight planning. Alternatively or additionally, an iced up state may be indicated by unexpectedly high resistance is experienced when trying to retract the locking pin from the locking position. The heating element may be arranged to be activated at a regular interval during flight of an aircraft comprising the aircraft wing assembly. The heating element may be arranged to be activated at set altitudes of an aircraft comprising a aircraft wing assembly. For example, such an arrangement may be activated when an aircraft is at a low altitude prior to landing, or when the aircraft as landed.

The locking pin further may comprise a load-bearing body. The load bearing body may be arranged to receive and bear the loads exerted on the locking pin via the fixed wing lug and wing tip device lug when the wing assembly is locked in the flight configuration

The locking pin may further comprise a heating cartridge, and the heating element may form part of the heating cartridge. The load-bearing body may surround the heating cartridge, or vice versa. The load bearing body may be cylindrical. The heating cartridge may be cylindrical. The cylindrical heating cartridge may be located within the inside of the cylindrical load bearing body, or vice versa. The skilled person will appreciate that alternative hollow bodies may be used, with one of the hollow load bearing body and hollow heating cartridge located within the other. For example, the hollow bodies may have a square or triangular cross-section. The heating element may extend along approximately the entire length of the locking pin, or any of up to 90%, 80%, 70%, 60% or 50% of the locking pin. Preferably, the heating element extends along the majority of the length of the locking pin that extends through the fixed wing lug and wing tip device lug. In such an arrangement, the heating element may efficiently heat the most exposed parts of the locking pin and potentially the fixed wing lugs and/or wing tip device lugs, which may be most vulnerable to icing up. The heating element may comprise a resistance coil and/or a positive temperature coefficient (PTC) heater.

The heating cartridge may comprise a resistance coil wound around a ceramic core. The heating cartridge may comprise a ceramic core, incorporating a PTC heater, for example the PTE heater having been printed or otherwise applied to the core. Use of a PTC heater may be advantageous due to the self-regulating nature of such devices. A thermal compound may thermally couple the heating cartridge to the load bearing body. The thermal compound may be any suitable thermal compound, as would be well understood by the person skilled in the art. The thermal compound may improve the heat transfer between the heating cartridge and the load bearing body, which may result in lower power being required in order to heat the locking pin sufficiently to avoid or remedy icing up of the locking pin, and/or speed up the de-icing of the locking pin.

The wing assembly may further comprise a threaded drive axle, and the locking pin may comprise a drive nut engaged with the threaded drive axle, such that rotational movement of the threaded drive axle drives translational movement of the locking pin. The locking pin may be moved into engagement with the fixed wing lug and wing tip device lug by rotation of the threaded drive axle in a first direction. The locking pin may be moved out of engagement with the fixed wing lug and wing tip device lug by rotation of the threaded drive axle in a second, opposite, direction. As the locking pin is hollow, the locking pin, when being retracted from the fixed wing lug and the wing tip device lug may overlap with the threaded drive axle. Such an arrangement may be particularly space efficient. The threaded drive axle may be rotated via various conventional means, as would be understood by a skilled person. In an alternative embodiment, the locking pin may be driven linearly via a pneumatic or hydraulic actuator. The heating cartridge may be located around a piston of a linear actuator.

According to a second aspect of the invention, there is provided an aircraft wing comprising the aircraft wing assembly of the first aspect of the invention.

According to a third aspect of the invention, there is provided an aircraft comprising the aircraft wing of the second aspect of the invention, or aircraft wing assembly of the first aspect of the invention.

According to a fourth aspect of the invention, there is provided a method of moving an aircraft wing assembly according to the first aspect of the invention from a flight configuration to a ground configuration, the method comprising the following steps: activating the heating element to heat the locking pin; retracting the locking pin from the fixed wing lug and wing tip device lug, actuating the wing tip device from the flight configuration to the ground configuration.

According to a fifth aspect of the invention, there is provided a method of de-icing the locking pin of an aircraft wing assembly according to the first aspect of the invention, the method comprising the step of activating the heating element of the locking pin.

According to a sixth aspect of the invention, there is provided a locking pin for an aircraft wing assembly, the locking pin comprising a load bearing body and a heating cartridge located within the load bearing body. The load bearing body and heating cartridge may be hollow. The load bearing body and heating cartridge may comprise any features described with reference to the first aspect, or any other aspect of the invention.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
FIGS 1A and 1B show a plan view and a frontal view respectively, of an aircraft according to a first embodiment of the invention;
FIG 2 shows an aircraft wing assembly according to the invention;
FIG 3 shows a heating cartridge which may be used in the invention;
FIG 4 shows cross-sectional view of an aircraft wing according to the invention; and
FIG 5 shows a flowchart of a method of operating an aircraft wing assembly according to the invention.

### DETAILED DESCRIPTION

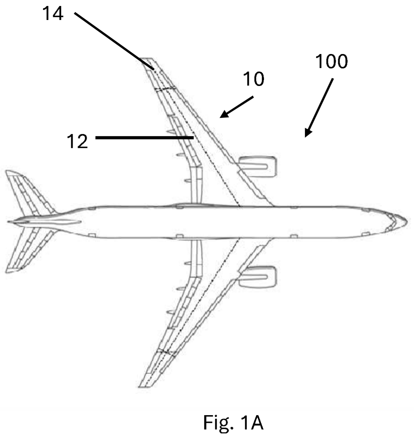

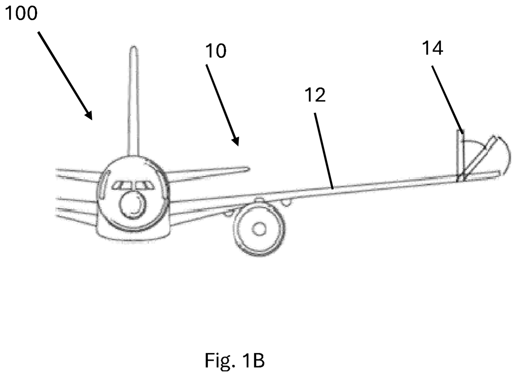

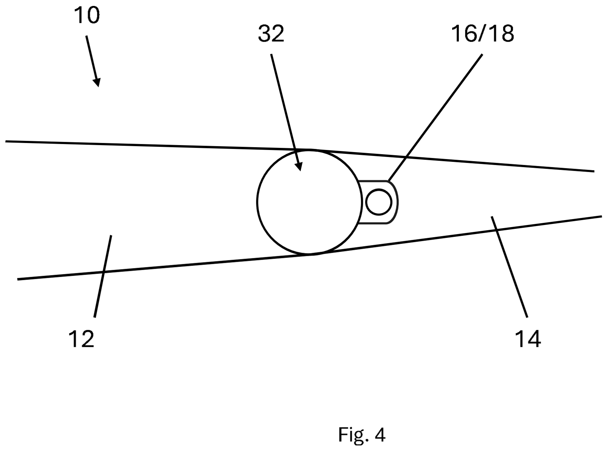

FIGS. 1A and 1B show a plan view and a front view of an aircraft 100 according to a first embodiment of the invention. The aircraft 100 comprises two wings 10 extending outwardly from a fuselage (only one wing is fully visible in FIG. 1B). Each wing 10 comprises a fixed wing 12 and a moveable wing tip device 14 located at the distal end of the fixed wing 12. In this embodiment, the wing tip device 14 is a planar wing tip extension. The wing tip device 14 is rotatably mounted to the fixed wing 12, and may be rotated from a flight configuration in which the span of the aircraft wing 10 is maximised, and a ground configuration in which the span of the aircraft wing 10 is reduced compared to the flight configuration. The wing tip device 14 may also be held in an intermediate position, somewhere between the flight configuration and the ground configuration. The skilled person will appreciate that various known mechanisms may be used to actuate the wing tip device 14 between the flight configuration and ground configuration. In this particular arrangement, a geared rotary actuator 32, as shown in figure 4, is used.

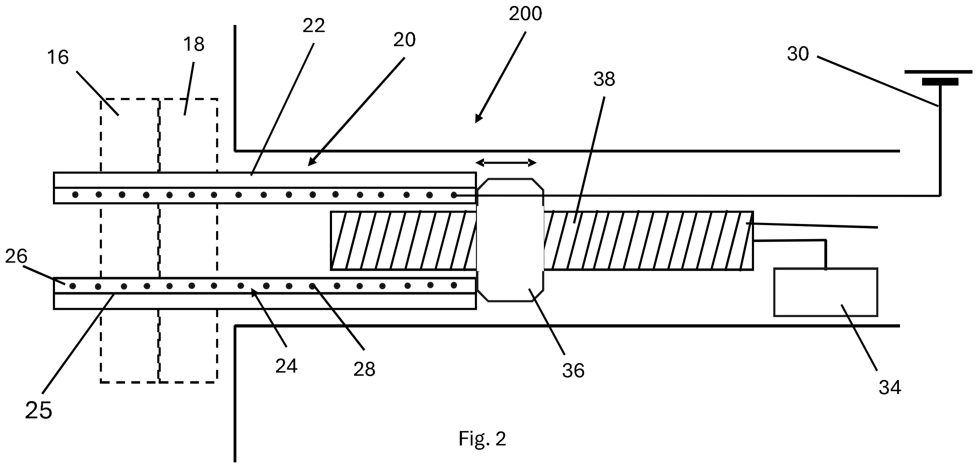

Figure 2 shows an aircraft wing assembly 200 which forms part of the wing 10 and enables the wing tip device 14 to be locked in the flight configuration. The fixed wing 12 comprises a plurality of fixed wing lugs 16 and the wing tip device 14 comprises a plurality of wing tip device lugs 18 (only one fixed wing lug 16 and wing tip device lug 18 are shown for clarity). The fixed wing lugs 16, in this particular embodiment, extend from the outer body of the geared rotary actuator 32 and remain fixed in position when the geared rotary actuator is moving the wing tip device 14 between the flight and ground configurations. When the wing tip device 14 is in the flight configuration, the fixed wing lugs 16 and wing tip device lugs 18 align. The aircraft wing assembly 200 comprises a locking pin 20 which is moveable to be inserted through the plurality of fixed wing lugs 16 and plurality of wing tip device lugs 18 such that the wing tip device 14 is then locked in the flight configuration.

The locking pin 20 comprises a hollow outer load-bearing body 22 which surrounds a hollow heating cartridge 24. The heating cartridge 24 has a ceramic hollow body 26 around which a resistance wire 28 has been embedded in a helical coil. The resistance wire 28 is connected to a power supply 30, which may be activated to heat the resistance wire 28, with the heating cartridge 24 then also increasing in temperature, which in turn heats the load-bearing body 22. The power supply 30 comprises a control unit which controls the activation of the heating cartridge 24 by supplying power to the resistance wire 28. A thermal compound 25 may be applied to the contact surfaces between the load-bearing body 22 and the heating cartridge 24 in order to improve the thermal conductivity between the two components.

The locking pin 20 further comprises a drive nut 36 from which the load bearing body 22 and heating cartridge 24 extend. The drive nut 36 is mounted to a threaded drive screw 38, such that axial rotation of the drive screw 38 results in the drive nut 36, and hence locking pin 20, moving laterally with respect to the longitudinal axis of the drive screw 38. This allows the drive screw 38 to move the locking pin 20 into the locking position, as shown in figure 2, in which the locking pin 20 extends through the fixed wing lugs 16 and wing tip device lugs 18, thereby locking the wing tip device 14 in the flight configuration, and out of engagement with the lugs, thereby allowing the wing tip device 14 to be moved into the ground or intermediate positions. The drive screw 38 is driven by a drive mechanism 34, which may be any conventional drive mechanism as would be understood by the person skilled in the art.

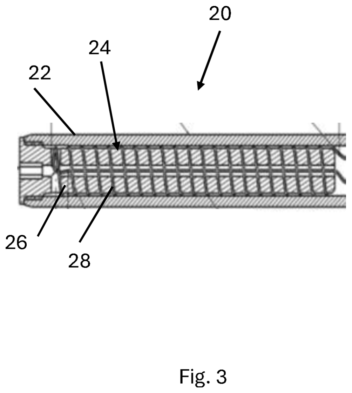

Figure 3 shows an alternative locking pin 20, in this embodiment with a resistance wire 28' wound around the outer surface of a ceramic body 26.

Figure 4 shows a cross-sectional view of the wing 10 in the flight configuration, comprising the fixed wing 12, wing tip device 14, a geared rotary actuator (GRA) 32 which is arranged to move the wing tip device between the flight configuration and ground configuration, and the fixed wing lugs 16 and wing tip device lugs 18. As the fixed wing lugs 16 and wing tip device lugs 18 are in alignment in the flight configuration, only a single lug is shown. The operation of the geared rotary actuator 32 is known in the art and no further description is necessary.

The locking pin 20 may be operated in a variety of different modes. Typically, the heating cartridge 24 will be activated when the wing tip device 14 is in the flight configuration, and the locking pin 20 is in the locking position. This is to ensure the locking pin 20 may be retracted from the locking position when required, and the wing tip device 14 moved into the ground configuration. Activation of the heating cartridge may be controlled according to one or more factors. For example, the heating cartridge 24 may be activated intermittently when an aircraft which comprises the aircraft wing is flying. Alternatively or additionally, the heating cartridge 24 may be activated when the aircraft is detected to be at an altitude, or in a flying pattern, which suggested the aircraft will be landing in the near future, or has landed. Such activation may be automatic, such that a landing or landed aircraft always activates the heating cartridge 24 to ensure that any icing of the locking pin 20, fixed wing lugs 16, and/or wing tip device lugs 18, is melted before the aircraft wing is moved from the flight configuration to the ground configuration. Alternatively, the heating cartridge 24 may be activated only when icing is detected, for example by a temperature sensor associated with the locking pin 20, or if the drive mechanism 34 of the locking pin 20 experiences undue resistance to movement of the locking pin 20.

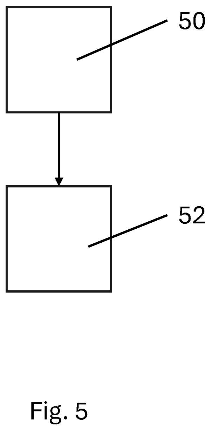

Figure 5 shows a method of operating a wing assembly structure 200 in which the wing tip device 14 is in the flight configuration with the locking pin 20 in the locking position, the method comprising the step 50 of activating the heating element 28, allowing the heating element to heat the wing assembly structure 200, then the step 52 of retracting the locking pin 20 from the locking position.

Alternative arrangements may be provided whilst also falling within the scope of the invention, as set out in the appended claims. For example, the locking pin 20 may be actuated into and out of the locking position by a hydraulic or pneumatic actuator. The locking pin may include a secondary locking mechanism, for example a slide pin that mechanically locks the locking pin in the locking position. Such an arrangement may ensure the safe locking of the wing tip device in the flight configuration even if the drive mechanism of the locking pin is damaged or inoperable.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing assembly,
the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, and
the fixed wing comprises a fixed wing lug, the wing tip device comprises a wing tip lug, and the wing assembly further comprises a locking pin,
wherein in the flight configuration the fixed wing lug and wing tip device lug are aligned such that the locking pin may be inserted through the fixed wing lug and wing tip device lug into a locking position to lock the wing tip device in the flight configuration,
wherein the locking pin is hollow and comprises a heating element.

2. An aircraft wing assembly as claimed in claim 1, wherein the locking pin further comprises a load-bearing body.

3. An aircraft wing assembly as claimed in claim 2, wherein the locking pin further comprising a heating cartridge, and the heating element forms part of the heating cartridge.

4. An aircraft wing assembly as claimed in any preceding claim, wherein the heating element comprises a resistance coil or positive temperature coefficient heater.

5. An aircraft wing assembly as claimed in claim 3, wherein the load-bearing body surrounds the heating cartridge, or vice versa.

6. An aircraft wing assembly as claimed in either of claims 3 or 5, wherein the heating cartridge comprises a resistance coil wound around a ceramic core.

7. An aircraft wing assembly as claimed in any of claims 3 to 6, wherein a thermal compound thermally couples the heating cartridge to the load bearing body.

8. An aircraft wing assembly of any preceding claim further comprising a threaded drive axle, and the locking pin comprises a drive nut engaged with the threaded drive axle, such that rotational movement of the threaded drive axle drives translational movement of the locking pin.

9. An aircraft wing comprising the aircraft wing assembly of any preceding claim.

10. An aircraft comprising the aircraft wing of claim 9.

11. A method of moving an aircraft wing assembly as claimed in claim 1 from a flight configuration to a ground configuration, the method comprising the following steps:
activating the heating element to heat the locking pin;
retracting the locking pin from the fixed wing lug and wing tip device lug,
actuating the wing tip device from the flight configuration to the ground configuration.

12. A method of de-icing the locking pin of an aircraft wing assembly according to any of claims 1 to 8, the method comprising the step of activating the heating element of the locking pin.

13. A locking pin for an aircraft wing assembly, the locking pin comprising a load bearing body and a heating cartridge located within the load bearing body.

14. A locking pin as claimed in claim 13, wherein the load bearing body and heating cartridge are hollow.
